# EUROPÄISCHE PATENTSCHRIFT

(11) **EP 1 002 004 B1**
(45) Veröffentlichungstag und Bekanntmachung des Hinweises auf die Patenterteilung: **17.10.2001**
(21) Anmeldenummer: 98940120.3
(22) Anmeldetag: 02.07.1998
(51) Int. Cl.: C08G 77/455, C08G 73/10, C08G 77/10, C08G 77/12

(54) **SI-H GRUPPEN ENTHALTENDE SILICONIMIDEN**
SILICONIMIDES CONTAINING Si-H GROUPS
SILICONIMIDES CONTENANT DES GROUPES Si-H

(30) Priorität: 07.08.1997 DE 19734245
(43) Veröffentlichungstag der Anmeldung: 24.05.2000
(73) Patentinhaber: Wacker-Chemie GmbH, 81737 München (DE)
(72) Erfinder: ACHENBACH, Frank, D-84359 Simbach (DE); FEHN, Armin, D-84489 Emmerting (DE); TOSCH, Pius, A-5145 Neukirchen (AT)
(74) Vertreter: Fritz, Helmut, Dr.
(86) Internationale Anmeldenummer: EP9804100
(87) Internationale Veröffentlichungsnummer: WO9907767

(56) Entgegenhaltungen:
- EP-A- 0 719 818
- GB-A- 2 131 038
- US-A- 4 381 396
- US-A- 4 404 350
- US-A- 4 598 135

## Beschreibung

Die Erfindung betrifft ein Verfahren zur Herstellung von Si-H-Gruppen enthaltenden Siliconimiden, Si-H-Gruppen enthaltende Siliconimide, sowie deren Verwendungen.

Bekannt sind Si-H-Gruppen enthaltende Siliconimide aus beispielsweise GB-A-2143246. Diese Siliconimide haben jedoch den Nachteil, daß sie Ethylengruppen in der Hauptkette aufweisen und deshalb nicht so stabil sind wie Verbindungen, die nur Si-O-Einheiten in der Hauptkette haben. Außerdem werden diese Verbindungen so hergestellt, daß, wo sie Si-H-Gruppen in der Hauptkette besitzen, die Bildung von Verzweigungen, die die gesamte Verbindung unlöslich machen, wahrscheinlich ist.

Des weiteren sind Siliconimide, die unter Umständen Si-H-Gruppen enthalten, aus beispielsweise EP-A-328027 bekannt. Diese Verbindungen werden jedoch bei der Herstellung während der Imidisierung auf 160 - 170°C erhitzt, wobei Wasser frei wird, so daß die hydrolyseempfindlichen Si-H-Gruppen, unkontrolliert, zumindest teilweise, in Si-OH oder Si-O-Gruppen überführt werden.

In US 4 598 135 A ist ein Verfahren zur Einäqilibrierung von Si-H-Gruppen enthaltenden Organosiloxanen in Norbonandicarbonsäureanhydrid-Organosiloxane beschrieben.

Es besteht daher die Aufgabe, Si-H-Gruppen enthaltende Siliconimide bereitzustellen, die weder Alkylengruppen in der Hauptkette, noch eine unkontrollierbare Anzahl an Si-OH Gruppen aufweisen.

Die Erfindung betrifft ein Verfahren zur Herstellung von Si-H-Gruppen enthaltenden Siliconimiden durch Einäquilibrieren von Si-H-Gruppen enthaltenden siliciumorganischen Verbindungen in Siliconimide.

Die Si-H-Gruppen enthaltenden siliciumorganischen Verbindungen werden dabei in den Siliconanteil der Siliconimide eingebaut, wobei die Si-H-Gruppen erhalten bleiben. Dabei werden die Si-H-Gruppen enthaltenden Siliconimide wasserfrei gebildet, weil die Imidisierung vor Zugabe der das Siliconimid neu verbindenden Si-H-Gruppen enthaltenden siliciumorganischen Verbindungen durchgeführt wurde.

Vorzugsweise werden Si-H-Gruppen enthaltende polymere Siliconimide hergestellt, welche aus gegebenenfalls Siloxan-Einheiten der allgemeinen Formel(I)

RₐSiO_{(4-a)/2} (I),

mindestens einer Siloxan-Einheit der allgemeinen Formel (II)

H_{b}R_{c}SiO_{(4-b-c)/2} (II),

und mindestens einer Siliconimid-Einheit der allgemeinen Formel (III) 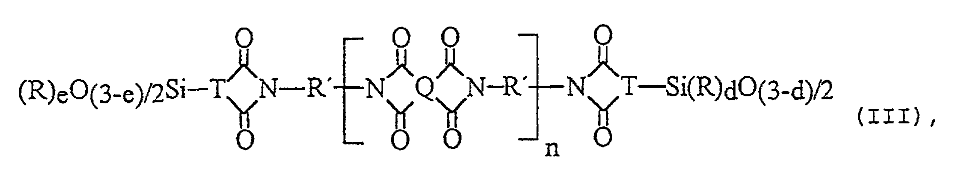 zusammengesetzt sind, indem siliciumorganische Verbindungen, welche aus mindestens einer Siloxan-Einheit der allgemeinen Formel (II) und gegebenenfalls Siloxan-Einheiten der allgemeinen Formel (I) aufgebaut sind,
in Siliconimide, welche aus mindestens einer Siliconimid-Einheit der allgemeinen Formel (III) und gegebenenfalls Siloxan-Einheiten der allgemeinen .Formel (I) zusammengesetzt sind, einäquilibriert werden, wobei
- R: einen einwertigen, nämlich Wasserstoff oder einen unsubstituierten oder substituierten C₁-C₂₀-Kohlenwasserstoffrest,
- T: einen dreiwertigen substituierten oder nicht substituierten aliphatischen C₁-C₁₈-Kohlenwasserstoffrest oder einen dreiwertigen substituierten oder nicht substituierten aromatischen C₆-C₁₈-Kohlenwasserstoffrest,
- R': einen zweiwertigen gegebenenfalls halogensubstituierten aromatischen C₆-C₃₀-Kohlenwasserstoffrest, C₂-C₂₀-Alkylen-oder Cycloalkylenrest oder einen zweiwertigen Rest der allgemeinen Formel (IV) 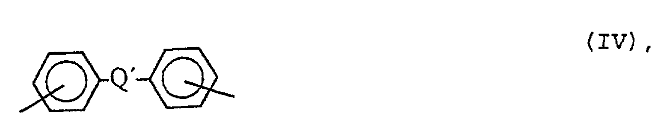
- Q': eine chemische Bindung oder einen zweiwertigen gegebenenfalls halogensubstituierten organischen C₁-C₂₀-Rest,
- Q: einen vierwertigen aromatischen Rest, der ausgewählt wird aus den Gruppen 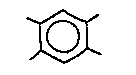 oder 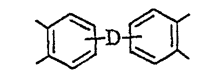 worin
- D: ausgewählt wird aus den Gruppen; -S(O)₂-, -CₓH₂ₓ-, -C(O)-O-R'-O-C(O)- und -O-R'-O-,
- x: eine ganze Zahl von 1 bis 5,.
- a: die Werte 0, 1, 2 oder 3,
- b: die Werte 1, 2 oder 3,
- c: die Werte 0, 1 oder 2,
- d: die Werte 0, 1, 2, oder 3,
- e: die Werte 0, 1, 2 oder 3 und
- n: eine ganze Zahl von 0 bis 300 bedeuten.

Wenn d und/oder e den Wert 3 aufweisen, sind die jeweiligen Silicongruppen endständig.

Die Kohlenwasserstoffreste R können Alkyl-, Cycloalkyl-, Alkenyl-, Aryl-, Aralkyl- oder Alkylarylgruppen sein. R bedeutet vorzugsweise Alkylreste mit 1 bis 10 Kohlenstoffatomen, wie Methyl, Ethyl, Propyl, Isopropyl, Butyl, Isobutyl, n-Pentyl, iso-Pentyl, neo-Pentyl und tert.-Pentyl; Cycloalkylreste mit 5 bis 8 Kohlenstoffatomen, wie Cyclopentyl, Cyclohexyl, Methylcyclohexyl, Ethylcyclohexyl, Cycloheptyl und Norbornylreste; Alkenylreste mit 2 bis 15 Kohlenstoffatomen, wie Vinyl, Allyl, n-5-Hexenyl, 4-Vinylcyclohexyl und 3-Norbornenyl; Arylreste mit 6 bis 30 Kohlenstoffatomen, wie Phenyl, Biphenyl, Anthryl, Phenanthryl und Naphthyl; Aralkylreste, wie Benzyl, 1- oder 2-Phenylethyl, 1-, 2- oder 3-Phenylpropyl, o-Methylphenylethyl, 3,5-Dimethylphenylethyl, p-Bromphenylethyl, o-Bromphenylethyl, 3,5-Dibromphenylethyl, p-Chlorphenylethyl und 3,5- Dichlorphenylethyl ; Alkylarylreste, wie o-, m-, p-Tolyl und Xylyl. Beispiele für substituierte Kohlenwasserstoffreste als Rest R sind halogenierte Kohlenwasserstoffrest, wie der Chlormethyl-, 3-Chlorpropyl-, 3-Brompropyl-, 3,3,3-Trifluorpropyl-, Trifluortolyl- und 5,5,5,4,4,3,3-Heptafluorpentylrest, sowie der Chlorphenyl-, Dichlorphenyl- und Trichlortolylrest; Mercaptoalkylreste, wie der 2-Mercaptoethyl- und 3-Mercaptopropylrest; Cyanoalkylreste, wie der 2-Cyanoethyl- und 3-Cyanopropylrest; Acyloxyalkylreste, wie der 3-Acryloxypropyl- und 3-Methacryloxypropylrest; Acetoxyalkylreste, wie der 3-Acetoxypropylrest; Bernsteinsäureanhydridalkylreste, wie der 3-Bernsteinsäureanhydridpropylrest; Pthalimidalkylreste; Etherreste, wie Methoxyethylenglykoloxypropylrest und Methoxypolyethylenglykoletherpropylrest und Epoxyrest, wie der Glycidyloxypropylrest, wobei Methyl, Ethyl, Propyl und Phenyl bevorzugt sind.

Die dreiwertigen Kohlenwasserstoffreste T sind beispielsweise 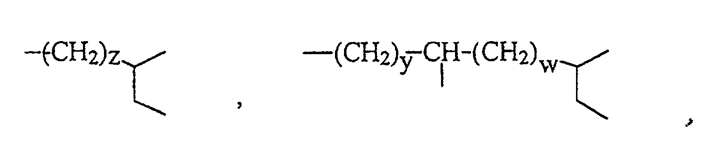 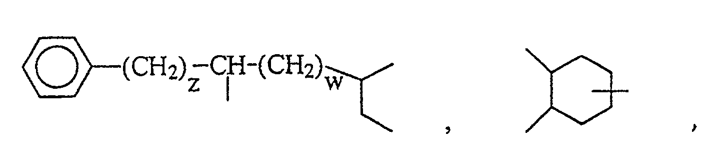 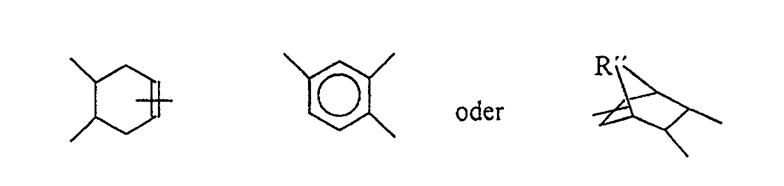 wobei
- z: die Werte 0, 1, 2 oder 3,
- w: die Werte 1 oder 2,
- y: die Werte 0 oder ganze Zahlen von 1 bis 16 und
- R'': -O-, -CH₂-, -(CH₂)₂- oder -CH=CH- bedeuten.

Der zweiwertige Kohlenwasserstoffrest R' bedeutet vorzugsweise folgende Gruppen

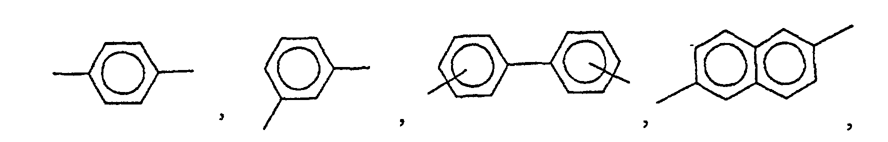

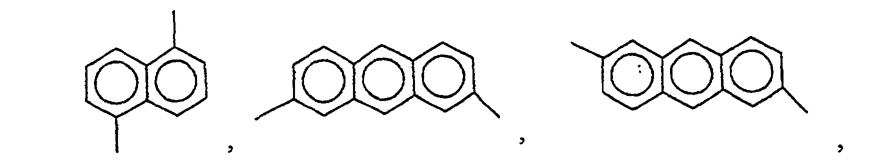

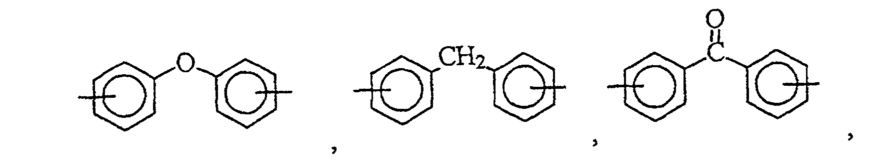

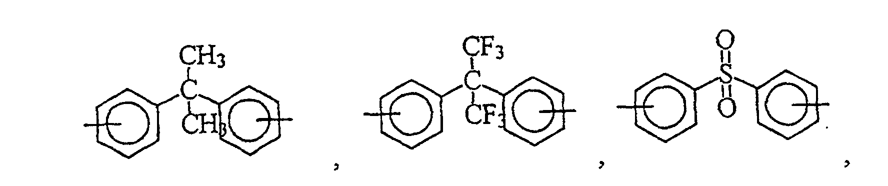

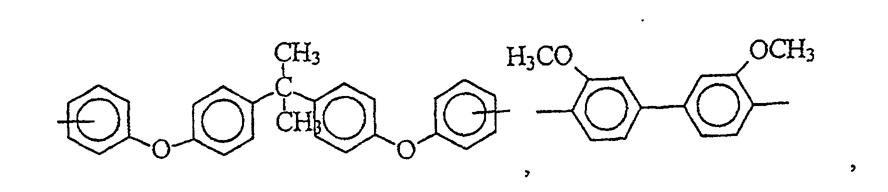

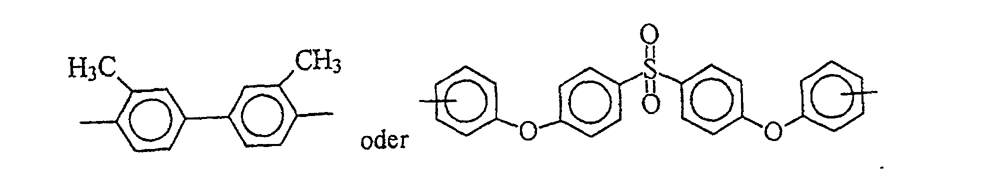

Q' wird vorzugsweise aus einer chemischen Bindung und den Gruppen -O-, -C(O)-, -S(O)₂-, -S-, -CₓH₂ₓ-, -C(CH₃)₂-, -C(CF₃)₂-, -CₓHₓ₋₂- oder -O-C₆H₄-Q''-C₆H₄-O- ausgewählt.

Q'' wird vorzugsweise aus einer chemischen Bindung und den Gruppen -o-, -c(o)-, -s(o)2-, -s-, -CxH2x--C(CH₃)₂-, -C(C(CF₃)₂-, CₓHₓ₋₂ ausgewählt.

Für Q können beispielsweise folgende Einheiten eingesetzt werden:

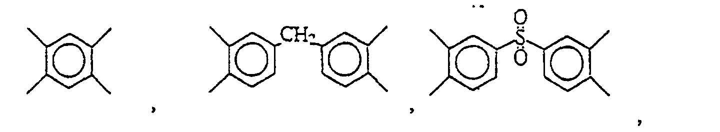

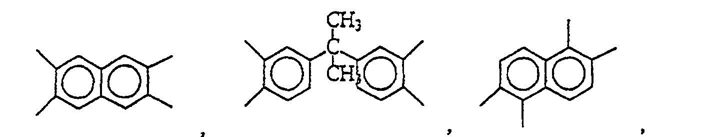

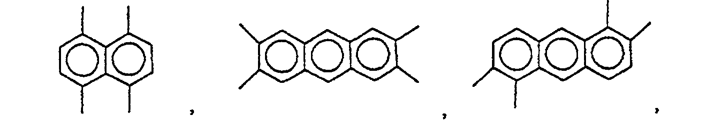

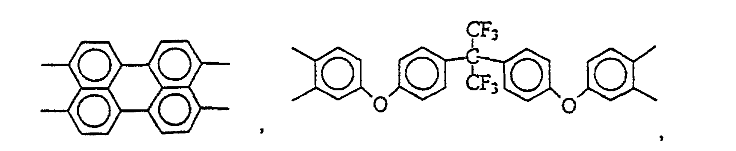

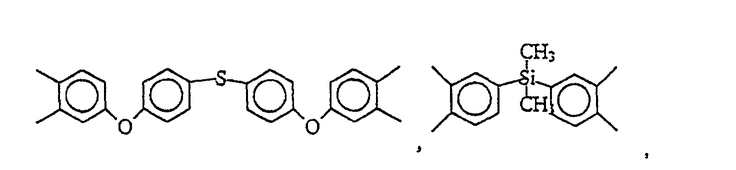

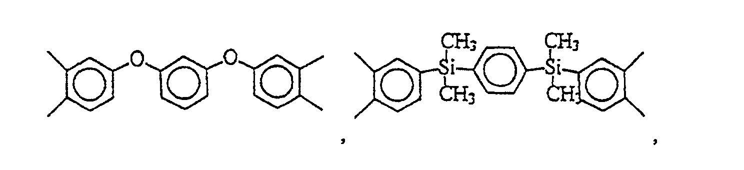

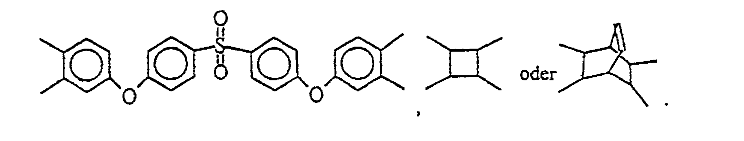

Die polymeren Si-H-Gruppen enthaltenden Siliconimide können überwiegend Siliconanteile, vergleichbare Anteile an Siliconanteil und Imidanteil oder überwiegend Imidanteile enthalten.

Vorzugsweise weisen die polymeren Si-H-Gruppen enthaltenden Siliconimide 0,001 - 99,6 Mol-%, besonders bevorzugt 0,1 - 25 Mol-%, insbesondere 5 - 20 Mol-% der allgemeinen Formel (I), 0,14 - 99,8 Mol-%, besonders bevorzugt 60 - 99,5 Mol-%, insbesondere 75 - 95 Mol-% der Formel (II) und 0,2 - 99,5 Mol-%, besonders bevorzugt 0,5 bis 40 Mol-%, insbesondere 1-15 der allgemeinen Formel (III) auf.

Die Herstellung der Ausgangs-Siliconimide, die aus Einheiten der allgemeinen Formel (III) und gegebenenfalls Siloxan-Einheiten der allgemeinen Formel(I) zusammengesetzt sind, ist beispielsweise in US-A-4,404,350 beschrieben.

Die Si-H-Gruppen aufweisenden siliumorganischen Verbindungen, welche aus mindestens einer Siloxan-Einheit der allgemeinen Formel (II) und gegebenenfalls Siloxan-Einheiten der allgemeinen Formel(I) aufgebaut sind, können cyclische und/oder offenkettige Polymere sein. Vorzugsweise besitzen die Si-H-Gruppen aufweisenden siliumorganischen Verbindungen mindestens 3 Si-H-Gruppen pro Molekül. Beispiele für die im erfindungsgemäßen Verfahren einsetzbaren Si-H-Gruppen aufweisenden siliumorganischen Verbindungen sind cyclische Organowasserstoffsiloxane, wie Siloxane der allgemeinen Formel (HSiR₃)ᵤ, in der u die Werte 3 bis 10, insbesondere 3 bis 6 bedeutet und R die vorstehenden Bedeutungen aufweist, vorzugsweise Methyl-, Ethyl-, Propyl- und Phenylreste. Insbesondere bevorzugt sind Tetramethylcyclotetrasiloxan, Pentamethylcyclopentasiloxan und Hexamethylcyclohexasiloxan.

Weitere Beispiele für die im erfindungsgemäßen Verfahren einsetzbaren Si-H-Gruppen aufweisenden siliumorganischen Verbindungen sind lineare Organowasserstoffsiloxane, wie vorzugsweise an beiden Enden durch Triorganosilyl- oder Diorganosilylgruppen blockierte Organowasserstoffsiloxane, Diorganosiloxanorganowasserstoffpolysiloxan-Copolymere, oder Mischungen aus zwei oder mehreren dieser Verbindungen. Besonders bevorzugt sind lineare Organowasserstoffsiloxane der allgemeinen Formel R₃Si-(-O-SiH(R))ᵥ-O-SiR₃, in der v die Werte 3 bis 100, insbesondere 3 bis 50 bedeutet und R die vorstehenden Bedeutungen aufweist, vorzugsweise Methyl-, Ethyl-, Propyl- und Phenylreste.

Das Verfahren wird vorzugsweise in Gegenwart eines Katalysators durchgeführt. Als Katalysatoren können bei dem erfindungsgemäßen Verfahren beliebige saure Katalysatoren eingesetzt werden, mit denen üblicherweise das Äquilibrieren von Organo(poly)siloxanen gefördert wird. Beispiele für solche Katalysatoren sind Toluolsulfonsäure, Schwefelsäure, Phosphorsäure, Trifluormethansulfonsäure, Trifluoressigsäure, Aluminiumsulfat-Dihydrat, Phosphornitridchloride, unter den Reaktionsbedingungen feste, saure Katalysatoren, wie säureaktivierte Bleicherde, saure Zeolithe, sulfonierte Kohle, und sulfoniertes Styrol-Divinylbenzol-Mischpolymerisat. Bevorzugte Katalysatoren sind Toluolsulfonsäure, Schwefelsäure, Trifluoressigsäure, Trifluormethansulfonsäure, Phosphornitridchloride und säureaktivierte Bleicherde. Besonders bevorzugt sind Schwefelsäure, Phosphornitridchloride und säureaktivierte Bleicherde. Die Katalysatoren werden in Mengen von 0,0001 bis 10 Gewichtsprozent zugegeben, bevorzugt in Mengen von 0,001 bis 5 Gewichtsprozent und besonders bevorzugt von 0,002 bis 3 Gewichtsprozent, jeweils bezogen auf das Gewicht von Siliconimid und Si-H-Gruppen enthaltender siliumorganischer Verbindung. Die Reaktion kann ohne oder in Gegenwart von Lösungsmitteln durchgeführt werden. Beispiele für erfindungsgemäß verwendete Lösungsmittel sind Alkangemische mit einem Siedebereich von 80 bis 110 °C bei 1 bar (abs.), Benzol, Toluol, Xylole, Chlorbenzol, Dichlorbenzol, halogenierte Alkane mit 1 bis 6 Kohlenstoffatomen, wie Methylenchlorid, Chloroform, Trichlorethylen, Perchlorethylen, sowie Ether, wie Tetrahydrofuran,
1,2-Dimethoxyethan, Diethylenglykoldimethylether, Triethylenglykoldimethylether, Di-n-butylether und Gemische aus mindestens zwei solcher Lösungsmittel. Toluol, Xylole, Methylenchlorid und Tetrahydrofuran sind bevorzugt. Besonders bevorzugt wird Toluol verwendet. Falls in Gegenwart von Lösungsmitteln gearbeitet wird, beträgt die bevorzugte Menge an Lösungsmittel 10 bis 90 Gewichtsprozent, besonders bevorzugt 40 bis 80 Gewichtsprozent bezogen auf das Gesamtgewicht von Siliconimid, Si-H-Gruppen enthaltender siliumorganischer Verbindung und Lösungsmittel.
Das erfindungsgemäße Verfahren kann unter den bisher beim Äquilibrieren von Organo(poly)siloxanen angewandten Drücken (0,5 bis 10 bar) und Temperaturen (von 20 °C bis 200°C) durchgeführt werden. Besonders bevorzugt ist der Druck gleich dem Druck der umgebenden Atmosphäre, d.h. etwa 1 bar (abs.) bzw. der hydrostatische Druck der im Reaktionsgefäß befindlichen Flüssigkeitssäule. Die bevorzugte Temperatur ist 20 °C bis 200°C, besser 20°C bis 150°C, wobei die besonders bevorzugte Temperatur 25°C bis 120°C ist. Die Reaktionszeit beträgt im Regelfall je nach Edukten, Temperatur, Katalysator und Lösungsmittel 30 Minuten bis 72 Stunden.
Die Reaktion kann unter Luft oder unter Schutzgas, wie beispielsweise Stickstoff oder Argon, durchgeführt werden.

Bevorzugt wird die Reaktion unter Stickstoff als Schutzgas unter Ausschluß von Luftfeuchtigkeit durchgeführt.

Die Erfindung betrifft auch Si-H-Gruppen enthaltende polymere Siliconimide, welche aus gegebenenfalls Siloxan-Einheiten der allgemeinen Formel (I)

RₐSiO_{(4-a)/2} (I),

mindestens einer Siloxan-Einheit der allgemeinen Formel (II)

H_{b}R_{c}SiO_{(4-b-c)/2} (II),

und mindestens zwei Siliconimid-Einheiten der allgemeinen Formel (III) 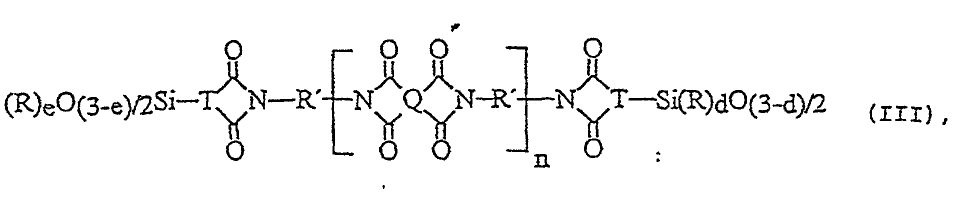 zusammengesetzt sind,
wobei
- R: einen einwertigen Rest, nämlich Wasserstoff oder einen unsubstituierten oder mit Fluor, Chlor, Brom, Mercapto-, Cyano-, Acyloxy-, Acetoxy-, Bernsteinsäureanhydrid-, Pthalimid-, Ether- und Epoxyresten substituierte C₁-C₂₀-Kohlenwasserstoffrest und
- T: einen dreiwertigen Kohlenwasserstoffrest, der ausgewählt wird aus 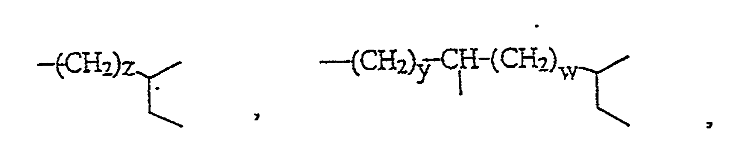 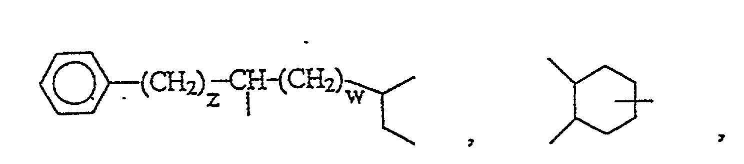 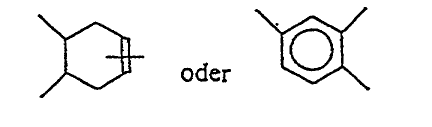 bedeuten
und *R*', Q, a, b, c, d, e und n die in Anspruch 2 angegebenen Bedeutungen aufweisen.

Außerdem ist Gegenstand der vorliegenden Erfindung die Verwendung von Si-H-Gruppen enthaltenden polymeren Siliconimiden als Si-H-Kammvernetzer und als Baustein beispielweise für Beschichtungen von Papier und elektrischen Elementen, z.B. Isolierung und/oder Schutzmantel von elektrischen Leitungen, Schaltelementen und -kreisen, in Klebstoffen, Formmassen, Filmen, Überzügen, Schichtstoffen, zähe Elastomeren und in Matrixmaterialien für Verbundwerkstoffe , wie Glasfaser- Kohlenstoffaser- oder Polyaramidfaser-, wie Kevlar-Polyaramidfaser-Verbundstoffe.

In den nachfolgenden Beispielen sind, falls jeweils nicht anders angegeben,
a) alle Mengenangaben auf das Gewicht bezogen, alle angegebenen Teile sind Gewichtsteile;
b) alle Drücke 0,10 MPa (abs.);
c) alle Temperaturen 20° C .

### Beispiele

### Beispiel 1

### 200 g eines analog US-A-4,605,567 hergestellten α,ω-Silicon-bis-propylbernsteinsäuredianhydrids, 39 g

4,4-Diaminodiphenylmethan, 8 g 2-Hydroxypyridin und 600 ml 1,2-Dichlorbenzol wurden gemischt und unter Rückfluß erhitzt. Nachdem die Lösung abgekühlt war, gab man zu der Mischung 100 ml Dichlormethan hinzu und goß die erhaltene homogene Produktmischung in Methanol. Die Umfällung aus Dichlormethan/Methanol wurde wiederholt. Es fiel ein Produkt aus, welches getrocknet wurde. Nach dem Herstellungsverfahren, IR- und NMR-Spektroskopie war das Produkt ein Siliconimid, welches im wesentlichen aus folgenden Einheiten
A) Imid-Einheit 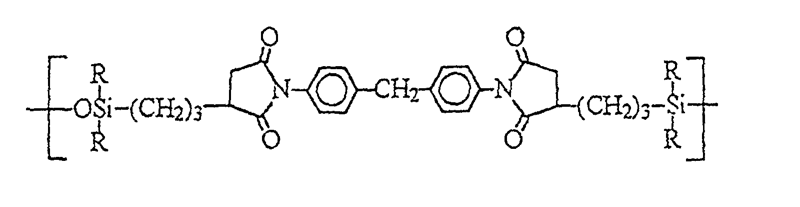
und B) Siloxan-Einheit 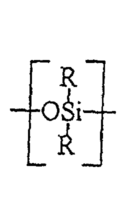 bestand, wobei R grundsätzlich für Methyl steht und das Polymer aus 10 Mol-% Imid- und 90 Mol-% Siloxaneinheiten zusammengesetzt war.

30,0 g des Siliconimids, 60,0 g Siloxanhydrid der Formel Me₃Si-(-O-SiH(Me))ₙ-O-SiMe₃ (n ist ca 35, käuflich bei Aldrich GmbH & Co KG), 150 g Toluol (getrocknet) und 0,09 g konzentrierte Schwefelsäure wurden unter Schutzgas 3 Stunden bei 100°C gerührt. Man filtrierte, entfernte das Lösungsmittel und trocknete das Produkt im Vakuum. Man erhielt 72 g eines hochviskosen Öles. Basierend auf der Methode der Herstellung, IR-und NMR-Spektren war das Produkt ein Si-H-Gruppen enthaltendes Siliconimid mit überwiegend Trimethylsilylgruppen an den Polymerenden, welches hauptsächlich folgende Zusammensetzung aufwies:

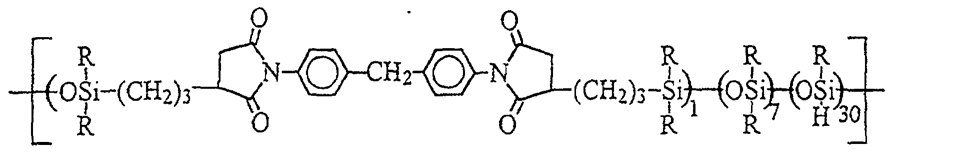

Die charakteristischen Absorptionsbanden im IR-Spektrum (NaCl-Platten) lagen bei 2167 cm⁻¹ vs (Si-H); 1714 cm⁻¹ m (Imid) ; 1261 cm⁻¹ vs (Si-CH₃) und 1097 cm⁻¹ vs (Si-O-Si). ²⁹Si-NMR: (CDCl₃) δ= 10 - 7 ppm (Si-O-), 18 - 21 ppm für -O-Si(Me)₂-O- und 33 - 35 ppm (-O-SiH(Me)-O-). Das Verhältnis der Integrale entsprach den Indizes in obiger Formel.

### Beispiel 2

30,0 g des Siliconimids aus Beispiel 1, 60,0 g Siloxanhydrid der Formel Me₃Si-(-O-SiH(Me))ₙ-O-SiMe₃ (n ist ca 35, käuflich bei Aldrich GmbH & Co KG), 150 g Toluol (getrocknet) und 0,20 g Trifluormethansulfonsäure wurden bei ca. 65°C gerührt. Nach 48 Stunden wurde die erhaltene homogene Lösung auf Raumtemperatur abgekühlt. Die Lösung wurde filtriert, vom Lösungsmittel befreit und das Produkt im Vakuum getrocknet. Man erhielt 67 g eines hochviskosen Öles. Basierend auf der Methode der Herstellung, IR-Spektrum und NMR-Spektren war das Produkt ein Si-H-Gruppen enthaltendes Siliconimid mit überwiegend Trimethylsilylgruppen an den Polymerenden, welches in der Zusammensetzung dem Produkt aus Beispiel 1 ähnelte.

### Beispiel 3

30,0 g des Siliconimids aus Beispiel 1, 125,0 g Siloxanhydrid der Formel Me₃Si-(-O-SiH(Me))ₙ-O-SiMe₃ (mit n ist ca 35, käuflich bei Aldrich GmbH & Co KG), 250 g Toluol (getrocknet) und 0,20 g konzentrierte Schwefelsäure wurden unter Schutzgas 3 Stunden bei 100°C gerührt. Man filtrierte, entfernte das Lösungsmittel und trocknete das Produkt im Vakuum. Man erhielt 110 g eines klaren Öles. Basierend auf der Methode der Herstellung, IR-, ¹H- und ²⁹Si-NMR-Spektren war das Produkt ein Si-H-Gruppen enthaltendes Siliconimid mit überwiegend Trimethylsilylgruppen an den Polymerenden, welches hauptsächlich folgende Zusammensetzung aufweist, wobei R grundsätzlich Methyl ist:

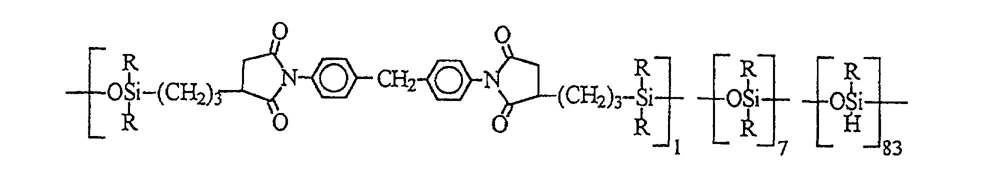

### Verwendungsbeispiel 1 (Trennpapierbeschichtung)

Der Si-H-Kammvernetzer aus Beispiel 3 (Menge an Vernetzer wurde so gewählt, das das Si-H/Vinyl-Verhältnis im Verwendungsbeispiel 1 und Vergleichsbeispiel 1 dasselbe war) wurde mit einem Vinyl-Gruppen enthaltenden Polymer, Pt-Katalysator und Inhibitor gemischt, und mit einem Glasstab auf Pergaminpapier, Buxil® N 925, 65 g/cm² (von der Fa. Bosso) zu einer dünnen Schicht (4g/m²) aufgetragen. Die Beschichtung wurde bei 150°C vernetzt. Anschließend wird mit Kautschukkleber T-4154 oder Acrylatkleber A-7475 (beide von der Fa. Beiersdorf) beklebt. Nach Alterung von 20 Stunden bei 70°C und 70 g/cm² Belastung, wird die Trennkraft nach der Finat Testmethode 4, 10 und 11 bestimmt.

### Vergleichsbeispiel 1

Ein H-Siloxan bestehend aus -O-SiH(Me)-Gruppen und mit Trimethylsilyl-Gruppen an den Polymerenden wird anstelle des Vernetzers in obiger Rezeptur eingesetzt.

Die zum Abziehen des Papiers erforderliche Trennkraft in [cN/cm] wurde ermittelt:
A) gegenüber dem Acrylatkleber A-7475:

| | | | | | | |
|---|---|---|---|---|---|---|
| Abzugsgeschwindigkeit | 0,3 m/min | 10 m/min | 50 m/min | 100 m/min | 200 m/min | 300 m/min |
| Beispiel 1 | 24 | 45 | 83 | 99 | 107 | 106 |
| Vergleichsbeispiel 1 | 7 | 12 | 32,0 | 41 | 42 | 45 |

B) gegenüber dem Kautschukkleber T-4154:

| | | | | | | |
|---|---|---|---|---|---|---|
| Abzugsgeschwindigkeit | 0,3 m/min | 10 m/min | 50 m/min | 100 m/min | 200 m/min | 300 m/min |
| Beispiel 1 | 16 | 25 | 36 | 41 | 57 | 49 |
| Vergleichsbeispiel 1 | 8 | 10 | 14,6 | 20 | 28 | 29 |

## Patentansprüche

1. Verfahren zur Herstellung von Si-H-Gruppen enthaltenden Siliconimiden durch Einäquilibrieren von Si-H-Gruppen enthaltenden siliciumorganische Verbindungen in Siliconimide.

2. Verfahren nach Anspruch 1, bei dem Si-H-Gruppen enthaltende polymere Siliconimide hergestellt werden, welche aus gegebenenfalls Siloxan-Einheiten der allgemeinen Formel(I)
RₐSiO_{(4-a)/2} (I),
mindestens einer Siloxan-Einheit der allgemeinen Formel (II)
H_{b}R_{c}SiO_{(4-b-c)/2} (II),
und mindestens einer Siliconimid-Einheit der allgemeinen Formel (III) 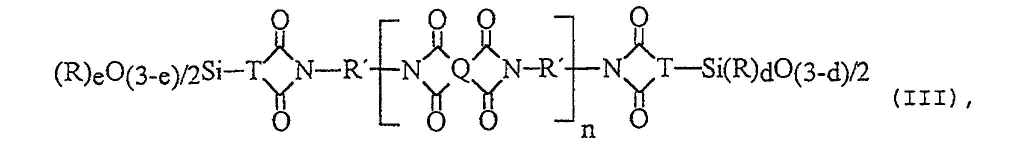 zusammengesetzt sind, indem siliciumorganische Verbindungen, welche aus mindestens einer Siloxan-Einheit der allgemeinen Formel (II) und gegebenenfalls Siloxan-Einheiten der allgemeinen Formel(I) aufgebaut sind, in Siliconimide, welche aus mindestens einer Siliconimid-Einheit der allgemeinen Formel (III) und gegebenenfalls Siloxan-Einheiten der allgemeinen Formel(I) zusammengesetzt sind, einäquilibriert werden,
wobei
R xeinen einwertigen, nämlich Wasserstoff oder einen unsubstituierten oder substituierten C₁-C₂₀-Kohlenwasserstoffrest,
T einen dreiwertigen substituierten oder nicht substituierten aliphatischen C₁-C₁₈-Kohlenwasserstoffrest oder einen dreiwertigen substituierten oder nicht substituierten aromatischen C₆-C₁₈-Kohlenwasserstoffrest,
R' einen zweiwertigen gegebenenfalls halogensubstituierten aromatischen C₆-C₃₀-Kohlenwasserstoffrest, C₂-C₂₀-Alkylenoder Cycloalkylenrest oder einen zweiwertigen Rest der allgemeinen Formel(IV) 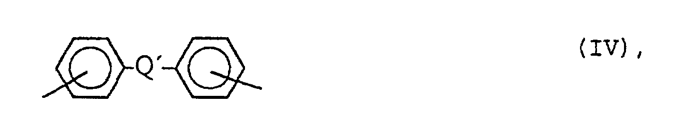
Q' eine chemische Bindung oder einen zweiwertigen gegebenenfalls halogensubstituierten organischen C₁-C₂₀-Rest,
Q einen vierwertigen aromatischen Rest, der ausgewählt wird aus den Gruppen 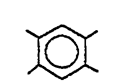 oder 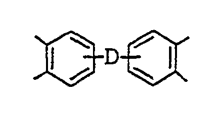 worin
D ausgewählt wird aus den Gruppen; -S(O)₂-, -CₓH₂ₓ-, -C(O)-O-R'-O-C(O)- und -O-R'-O-,
x eine ganze Zahl von 1 bis 5,.
a die Werte 0, 1, 2 oder 3,
b die Werte 1, 2 oder 3,
c die Werte 0, 1 oder 2,
d die Werte 0, 1, 2, oder 3,
e die Werte 0, 1, 2 oder 3 und
n eine ganze Zahl von 0 bis 300 bedeuten.

3. Verfahren nach Anspruch 1 oder 2, welches in Gegenwart eines sauren Katalysators durchgeführt wird.

4. Si-H-Gruppen enthaltende polymere Siliconimide, welche aus gegebenenfalls Siloxan-Einheiten der allgemeinen Formel (I)
RₐSiO_{(4-a)/2} (I),
mindestens einer Siloxan-Einheit der allgemeinen Formel (II)
H_{b}R_{c}SiO_{(4-b-c)/2} (II),
und mindestens zwei Siliconimid-Einheiten der allgemeinen Formel (III) 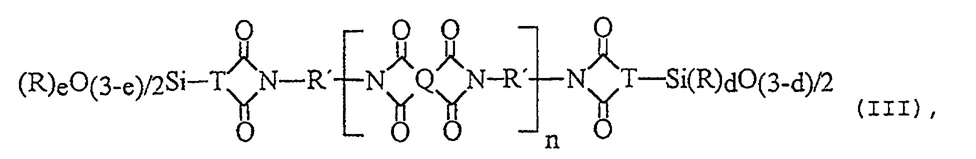 zusammengesetzt sind,
wobei
R einen einwertigen Rest, nämlich Wasserstoff oder einen unsubstituierten oder mit Fluor, Chlor, Brom, Mercapto-, Cyano-, Acyloxy-, Acetoxy- Bernsteinsäureanhydrid-, Pthalimid-, Ether- und Epoxyresten substituierten C₁-C₂₀-Kohlenwasserstoffrest und
T einen dreiwertigen Kohlenwasserstoffrest, der ausgewählt wird aus 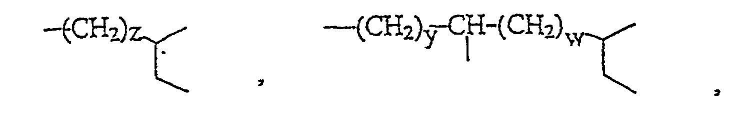 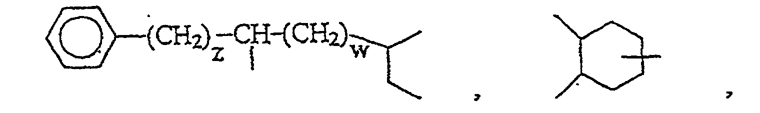 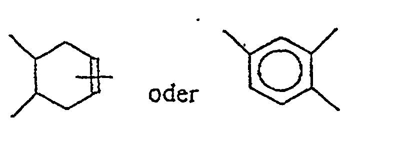
bedeuten
und R', Q, a, b, c, d, e und n die in Anspruch 2 angegebenen Bedeutungen aufweisen.

5. Verwendung der Si-H-Gruppen enthaltenden polymeren Siliconimide gemäß Anspruch 4 als Si-H-Kammvernetzer, als Baustein für Beschichtungen von Papier und elektrischen Elementen, in Klebstoffen, Formmassen, Filmen, Überzügen, Schichtstoffen, zähen Elastomeren und in Matrixmaterialien für Verbundwerkstoffe.

## Claims

1. Process for the preparation of silicone imides containing Si-H groups by equilibrating organosilicon compounds containing Si-H groups into silicone imides.

2. Process according to Claim 1, in which polymeric silicone imides which contain Si-H groups and are composed of
optionally siloxane units of the general formula (I)
RₐSiO_{(4-a)/2} (I),
at least one siloxane unit of the general formula (II)
H_{b}R_{c}SiO_{(4-b-c)/2} (II)
and at least one silicone imide unit of the general formula (III) 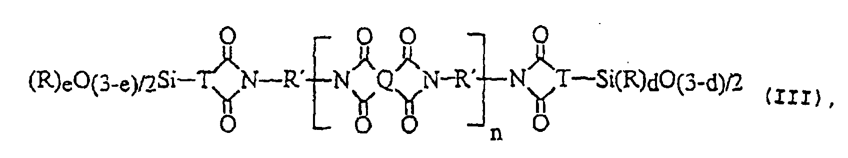 are prepared by a procedure in which organosilicon compounds which are built up from at least one siloxane unit of the general formula (II) and optionally siloxane units of the general formula (I) are equilibrated into silicone imides which are composed of at least one silicone imide unit of the general formula (III) and optionally siloxane units of the general formula (I),
wherein
R denotes a monovalent radical, namely hydrogen or an unsubstituted or substituted C₁-C₂₀-hydrocarbon radical,
T denotes a trivalent substituted or unsubstituted aliphatic C₁-C₁₈-hydrocarbon radical or a trivalent substituted or unsubstituted aromatic C₆-C₁₈-hydrocarbon radical,
R' denotes a divalent optionally halogen-substituted aromatic C₆-C₃₀-hydrocarbon radical, C₂-C₂₀-alkylene or cycloalkylene radical or a divalent radical of the general formula (IV) 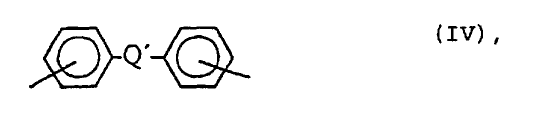
Q' denotes a chemical bond or a divalent optionally halogen-substituted organic C₁-C₂₀-radical,
Q denotes a tetravalent aromatic radical which is chosen from the groups 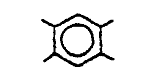 and 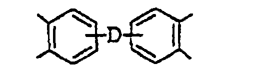 wherein
D is chosen from the groups: -S(O)₂-, -CₓH₂ₓ-, -C(O)-O-R'-O-C(O)- and -O-R'-O-,
x denotes an integer from 1 to 5,
a denotes the values 0, 1, 2 or 3,
b denotes the values 1, 2 or 3,
c denotes the values 0, 1 or 2,
d denotes the values 0, 1, 2 or 3,
e denotes the values 0, 1, 2 or 3 and
n denotes an integer from 0 to 300.

3. Process according to Claim 1 or 2, which is carried out in the presence of an acid catalyst.

4. Polymeric silicone imides which contain Si-H groups and are composed of optionally siloxane units of the general formula (I)
RₐSiO_{(4-a)/2} (I),
at least one siloxane unit of the general formula (II)
H_{b}R_{c}SiO_{(4-b-c)/2} (II)
and at least two silicone imide units of the general formula (III) 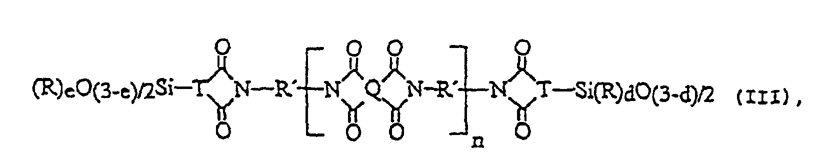 wherein
R is a monovalent radial, namely hydrogen or a C₁-C₂₀-hydrocarbon radical which is unsubstituted or substituted by fluorine, chlorine, bromine, mercapto, cyano, acyloxy, acetoxy, succinic acid anhydride, phthalimide, ether and epoxy radicals and
T is a trivalent hydrocarbon radical which is chosen from 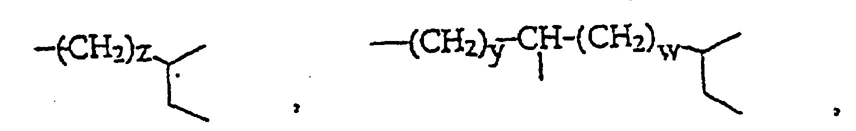 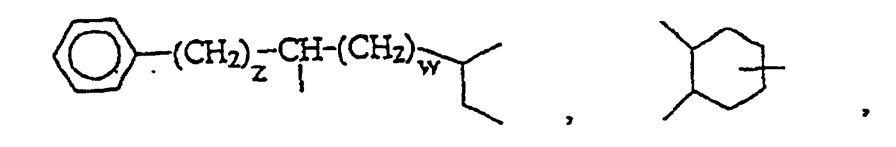 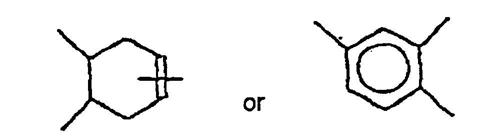 and R', Q, a, b, c, d, e and n have the meanings given in Claim 2.

5. Use of the polymeric silicone imides containing Si-H groups, according to Claim 4, as Si-H comb crosslinking agents, as a unit for coatings of paper and electrical elements, in adhesives, moulding compositions, films, coverings, laminates and tough elastomers and in matrix materials for composite materials.

## Revendications

1. Procédé de préparation de silicone-imides renfermant des groupes Si-H par équilibrage de composés organosiliciés renfermant des groupes Si-H pour donner des silicone-imides.

2. Procédé selon la revendication 1, dans lequel on prépare des silicone-imides polymères renfermant des groupes Si-H, qui sont composés de éventuellement des motifs siloxane de formule générale (I)
RₐSiO_{(4-a)/2} (I),
au moins un motif siloxane de formule générale (II)
H_{b}R_{c}SiO_{(4-b-c)/2} (II),
et au moins un motif silicone-imide de formule générale (III) 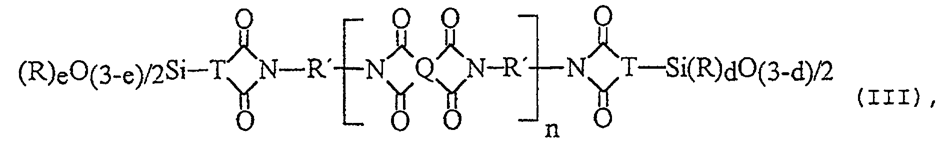 en équilibrant des composés organosiliciés qui sont constitués d'au moins un motif siloxane de formule générale (II) et éventuellement de motifs siloxane de formule générale (I),
pour donner des silicone-imides qui sont composés d'au moins un motif silicone-imide de formule générale (III) et éventuellement de motifs siloxane de formule générale (I),
où
R représente un radical monovalent, à savoir un hydrogène ou un radical hydrocarboné en C₁-C₂₀ non substitué ou substitué,
T représente un radical hydrocarboné en C₁-C₁₈ aliphatique trivalent, substitué ou non substitué, ou un radical hydrocarboné en C₆-C₁₈ aromatique trivalent, substitué ou non substitué,
R' représente un radical hydrocarboné en C₆-C₃₀ aromatique bivalent éventuellement halogéno-substituté, un radical cycloalkylène ou alkylène en C₂-C₂₀ ou un radical bivalent de formule générale (IV) 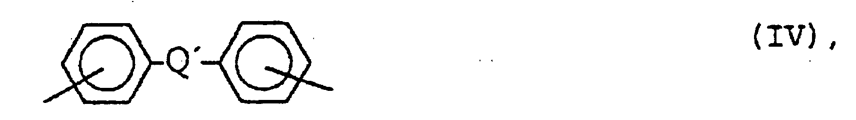
Q' représente une liaison chimique ou un radical en C₁-C₂₀ organique bivalent éventuellement halogéno-substitué,
Q représente un radical aromatique tétravalent qui est choisi parmi les groupes 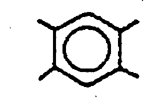 ou 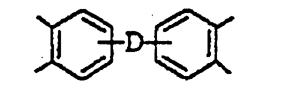 dans lesquels
D est choisi parmi les groupes: - S(O)₂-, -CₓH₂ₓ-, -C(O)-O-R'-O-C(O)- et -O-R'-O-,
x représente un entier de 1 à 5,
a vaut 0, 1, 2 ou 3,
b vaut 1, 2 ou 3,
c vaut 0, 1 ou 2,
d vaut 0, 1, 2 ou 3,
e vaut 0, 1, 2 ou 3 et
n représente un entier de 0 à 300.

3. Procédé selon la revendication 1 ou 2, qui est réalisé en présence d'un catalyseur acide.

4. Silicone-imides polymères renfermant des groupes Si-H, qui sont composés de éventuellement des motifs siloxane de formule générale (I)
RₐSiO_{(4-a)/2} (I),
au moins un motif siloxane de formule générale (II)
H_{b}R_{c}SiO_{(4-b-c)/2} (II),
et au moins deux motifs silicone-imide de formule générale (III) 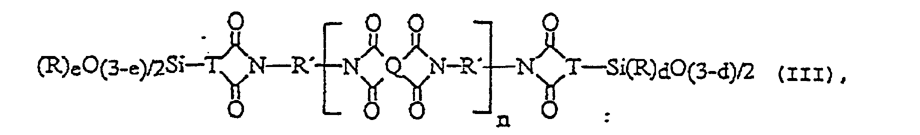 où
R représente un radical monovalent, à savoir un hydrogène ou un radical hydrocarboné en C₁₋C₂₀ non substitué ou substitué par du fluore, du chlore, du brome, des radicaux mercapto, cyano, acyloxy, acétoxy, anhydride succinique, phtalimide, éther et époxy, et
T représente un radical hydrocarboné trivalent qui est choisi parmi 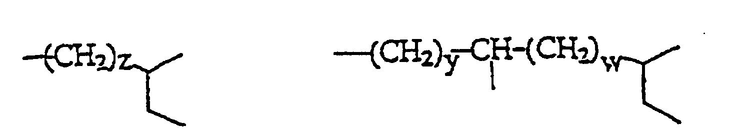 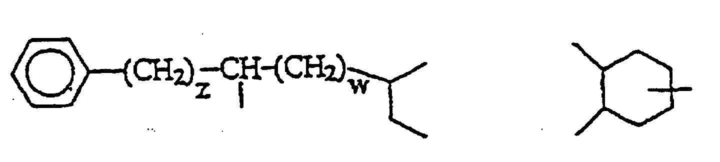 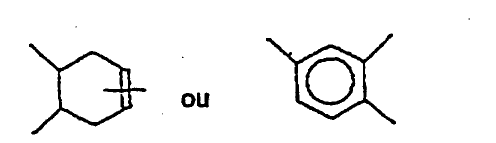 et R', Q, a, b, c, d, e et n ont les significations indiquées à la revendication 2.

5. Utilisation des silicone-imides polymères renfermant des groupes Si-H selon la revendication 4, en tant qu'agents de réticulation Si-H en peigne, en tant que constituant pour des revêtements de papier et d'éléments électriques, dans des adhésifs, des compositions de moulage, des films, des enduits, des stratifiés, des élastomères tenaces et dans des matériaux matriciels pour matériaux composites.
